# EUROPEAN PATENT SPECIFICATION

(11) **EP 3 316 524 B1**
(45) Date of publication and mention of the grant of the patent: **04.12.2019**
(21) Application number: 17198234.1
(22) Date of filing: 25.10.2017
(51) Int. Cl.: H04L 12/40

(54) **PROTECTION DEVICE FROM CYBER ATTACKS TO A VEHICLE THROUGH A DIAGNOSTIC CONNECTOR AND RELATED METHOD**
VERFAHREN UND VORRICHTUNG FÜR DEN SCHUTZ VOR CYBERANGRIFFEN GEGEN EINEN KRAFTFAHRZEUG DURCH EINEN DIAGNOSTISCHEN KONNEKTOR
PROCÉDÉ ET DISPOSITIF DE PROTECTION DE CYBER ATTAQUES CONTRE UNE AUTOMOBILE GRÂCE À UN CONNECTEUR DE DIAGNOSTIC

(30) Priority: 28.10.2016 IT 201600109368
(43) Date of publication of application: 02.05.2018
(73) Proprietor: Magneti Marelli S.p.A., 20011 Corbetta (MI) (IT)
(72) Inventor: ROSADINI, Christian, 20011 Corbetta (Milano) (IT); SENNI GUIDOTTI MAGNANI, Cosimo, 20011 Corbetta (Milano) (IT); NESCI, Walter, 20011 Corbetta (Milano) (IT)
(74) Representative: Crovini, Giorgio

(56) References cited:
- WO-A1-2007/107682
- US-A1- 2015 191 136
- US-A1- 2016 019 389

## Description

The present invention relates to techniques for protection from cyber attacks through a vehicle diagnostic connector that accesses at least one CAN (Controller Area Network) communication network of the vehicle comprising a CAN bus and a plurality of nodes, which are associated to the CAN bus in signal-exchange relationship and comprise control units for controlling vehicle functions, the vehicle diagnostic connector accessing the at least one CAN communication network for exchanging messages comprising a message identifier and a data portion.

The diagnostic connector, also referred to as OBD (On-Board Diagnostic) connector, of a vehicle, in particular a motor vehicle, in particular a car vehicle, is necessary for reasons of diagnostic operations carried out by a car mechanics in a repair workshop or for measurements of emissions performed by public officials. For insurance or consumer purposes, to the diagnostic port there can be connected devices, referred to as "dongles", which are typically provided with remote connection, in particular to the Internet, either directly via a mobile network, for example GSM, or indirectly via connection to a smartphone. An example of OBD connector is SAE J1962, a connector that is equivalent to connectors operating according to the ISO/DIS 15031 standard.

The OBD connector hence enables access to the vehicle network, which in this way may become an access point for cyber attacks carried out by injecting messages with malevolent intent into the vehicle. Known cases of attack are based either on physical access to the OBD port or on remote access via devices that have been hacked, connected in the OBD port (for example, the so-called dongle devices) and remotely connected to an external network, for example the Internet.

In this context, the Controller Area Network (CAN) has asserted itself as the main communication channel within vehicles, in particular motor vehicles. The CAN is based upon broadcast of frames, or messages, for sharing data between different microcontrollers, managing critical or accessory functions, such as cruise-control or air-conditioning functions. The CAN, and the corresponding bus, are distinguished by their simplicity, compatibility with real-time application, and low installation cost. However, the CAN lacks support to security. Consequently, attacks may come in particular from the OBD port and propagate through the CAN bus.

Protection solutions are known that implement an OFF/ON strategy for protecting the OBD port, whereby connection of the CAN bus to the OBD port is interrupted via a dedicated pin, which can be coupled to the anti-burglary device provided by a third company; alternatively, the OBD port is connected to the CAN bus.

However, this solution does not offer countermeasures for the case of a dongle inserted in the OBD port that has to access the CAN in any condition of use of the vehicle, and that hence, as has been mentioned previously, may constitute a problem of security if the dongle has been hacked.

In particular, an OFF-ON control of the connection to the CAN bus does not enable blocking of the messages in a selective way and requires external enabling commands for its control.

The object of the present invention is to provide a monitoring method that will enable selective blocking of the messages and will not require external enabling commands for its control.

Document US 2015/191136 A1 discloses an intra-vehicle communication network which includes a traffic monitoring module executing different controls on the messages.

Document US 2016/019389 A1 dicloses a device for cyber-attack protection which includes a message screening system which controls a whitelist, which is ckeked for the presence of certain messages.

Document WO 2007/107682 A1 discloses a diagnostic connector. It is provided receiving diagnostic request messages from a tester and the corresponding response messages from the Engine Control Unit, preventing any message that is not explicitly authorized to reach the bus or the diagnostic connector.

According to the present invention, the above object is achieved thanks to a protection device, as well as to a corresponding protection method, which present the characteristics recalled specifically in the ensuing claims.

The invention will now be described with reference to the annexed drawings, which are provided purely by way of non-limiting example and in which:
- Figure 1 is a schematic illustration of a vehicle equipped with a diagnostic connector and data-communication network in which the protection device described herein operates;
- Figure 2 is a schematic illustration of the protection device described herein;
- Figure 3 is a schematic illustration of functional modules of the protection device described herein; and
- Figure 4 is a schematic illustration of a flowchart of operations carried out by a module of the protection device described herein.

The protection device described herein is configured to be set upstream of the CAN (Controller Area Network) and intercept the CAN messages, forwarding the licit messages and blocking messages that, according to a set of rules, may be considered dangerous.

The distinction between licit messages and messages to be blocked implemented by the protection device described herein is based upon the following considerations:
- the protection device should enable correct communication with the apparatuses of the workshop mechanics or of public officials; communication with these apparatuses is of a diagnostic type and governed by the standards ISO 15765-2, ISO 15765-4, ISO 14229-1 and ISO15031-5; this results in letting through only the data that are in accordance with the standards referred to and blocking all the others;
- wherever possible, the protection device should also block some communications of a diagnostic type in the case where they are not in line with given vehicle conditions, for example conditions where the vehicle is travelling, is stationary, or is moving above a given speed; for instance, a workshop mechanics has the possibility of updating the software or the parameters of a control unit, and this operation takes place via diagnostic communication; this operation is carried out with the vehicle stationary in the workshop so that, if the protection device detects this type of communication with the vehicle moving, it is licit to assume that it is due to a malevolent attack (aimed at causing damage to the vehicle itself) rather than to an operation of normal maintenance/repair; in this case, the protection device of the OBD connector should block this communication;
- in addition, a typical case of attacks is of a DOS (Denial Of Service, or Negation Of Service) type, which is implemented by sending a series of messages (even licit messages) but at a rate much higher than the typical one and such as to saturate the capacity of the bus or the capacity of management of the data by the control units connected to the network; the effect may be a malfunctioning of one or more control units; in this case, the protection device is configured for intervening by blocking communication on the bus;
- in the majority of the cases, the dongles available on the market that connect up to the OBD connector implement a standard connection such as that of the SAE J1962 connector, in order not to be limited to just one vehicle or brand, so that they manage just one CAN line; this suggests preferably implementing a robust filtering policy on that particular CAN line (because it is always present and because it is delicate, given its function) and implementing a more relaxed policy on the other lines; for instance, to reduce costs of the protection device 30, which are linked to the number and complexity of the components, it may be sufficient to prevent, on those further lines, where they are present, DOS attacks and/or interrupt the communication when the vehicle is moving.

Thus, the device described herein for protection from cyber attacks through a vehicle diagnostic connector that accesses at least one CAN communication network of a vehicle that comprises a CAN bus and a plurality of nodes, which are associated to said CAN bus in signal-exchange relationship and comprise control units for controlling vehicle functions, said vehicle diagnostic connector accessing said at least one CAN communication network for exchanging messages that comprise a message identifier and a data portion, includes means for receiving and transmitting CAN messages from and to said diagnostic connector, in particular CAN transceivers, and corresponding means for receiving and transmitting CAN messages from and to the aforesaid at least one CAN communication network, as well as a module configured for detecting said message identifier and a diagnostic-service identifier that is comprised in the data portion of a message received at said protection device and for carrying out blocking of the message according to the value of said message identifier and said diagnostic-service identifier, and according to information on the vehicle conditions. [?FORSE CONVIENE SPEZZARE QUESTO PERIODO IN PIU' FRASI]

The module may be configured for detecting said message identifier and diagnostic-service identifier, and can operate according to different sets of blocking rules according to which network is connected thereto.

The protection device may comprise a violation-detection module for detecting other attacks, such as DOS attacks.

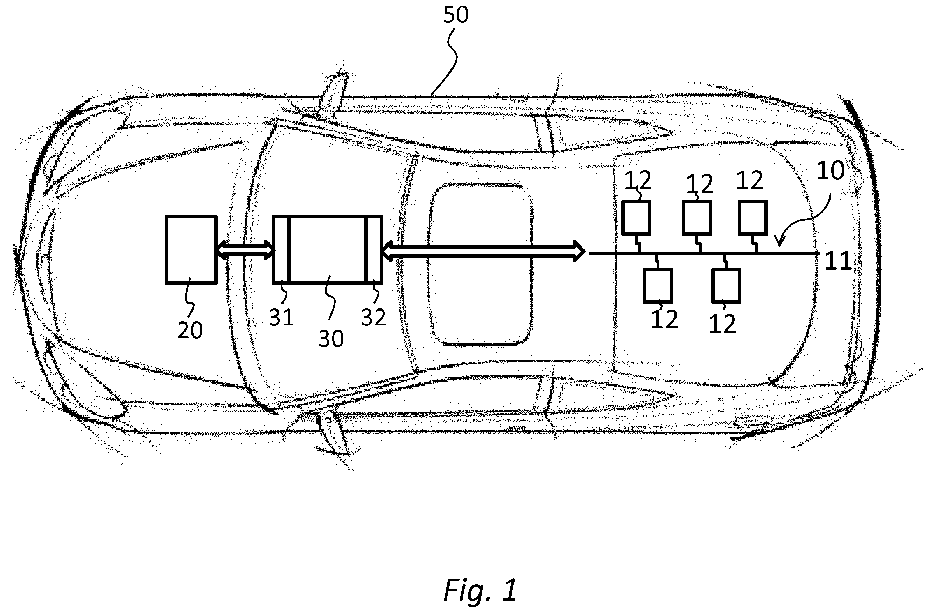

Hence, in this context, Figure 1 shows schematically an automobile 50, which comprises a motor-vehicle communication network of a CAN type, designated as a whole by the reference number 10. The communication network 10 comprises a CAN bus 11 connected to which are a plurality of CAN nodes 12. The modalities of operation of CANs and CAN buses are in themselves known to the person skilled in the sector, and described, for example, in the ISO 11898-1 standard, so that they will not be illustrated herein.

The nodes 12 are provided with respective CAN interfaces (not illustrated in the figure) for exchanging data on the CAN bus 11 and mainly comprise electronic control units (ECUs), which are not illustrated in Figure 1 either and which correspond, among other things, to various types of electronic control units with microprocessor for control of various vehicle systems, for example, engine, brakes, suspensions, transmission, lights, air-conditioning system, power windows, door locks, and airbags. The nodes 12 may of course comprise other electronic modules, such as gateway modules.

The communication network 10 is accessible through a diagnostic connector 20, i.e., an OBD (On-Board Diagnostics) access port that enables reading of the data in the control units of the nodes 12 via the CAN bus 11. In particular, for example, it is a diagnostic connector operating according to the OBD-II standard.

According to the solution described herein, it is envisaged to provide between the diagnostic connector 20 and the CAN 10, a protection device 30 configured for blocking cyber attacks on the vehicle carried out through the diagnostic connector 20.

The aforesaid protection device 30 is a device that hence comprises a diagnostic-connector side 31, which is connected to the diagnostic connector 20 and exchanges messages CF, in particular in the form of CAN frames, with the diagnostic connector 20 and with the possible external device connected in the diagnostic connector 20, as well as a vehicle side 32, which exchanges the messages CF with the communication network of the vehicle 10.

As has been mentioned, the diagnostic connector 20 is, in the example described herein, a 16-pin connector of a standardized SAE J1962 type, in which some of the pins are assigned and the use of others is left to the discretion of the automobile manufacturer. The assigned pins comprise, for example, the positive and negative bus lines of the SAE J1850 (PWM and VPW) network interface (pins 2 and 10), the battery voltage (pin 16), the vehicle-frame ground (pin 4) and signal ground (pin 5), and 9141-2 and ISO 14230-4 network lines (pins 7 and 15, respectively). It should be noted that the pins 1, 3, 8, 9, 12, 12, 13 can be connected at the discretion of the manufacturer. In particular, in the example described herein, it is possible to use the aforesaid pins that can be connected at the discretion of the manufacturer for connecting thereto further CANs of the vehicle and thus enabling, via a diagnostic device that operates through the OBD socket, diagnosis also of the aforesaid further CANs (by way of example, the main CAN may refer to the engine or power-train system, and the others may refer to the so-called body-frame system, which, for instance, regards the door locks and power windows, and to the so-called dashboard system, which regards the dashboard instrumentation, such as air-conditioning). In variant embodiments, the second bus may be the one associated to the control units for vehicle dynamics, and the third bus may be provided for body and comfort systems.

The protection device 30 is hence a device configured for managing a plurality of CAN buses 11 of networks 10, starting from a first CAN bus 11, which is the one specified for the SAE J1962 connector, which is usually connected to a CAN bus, which is in turn connected to a node in which the engine control unit resides, up to three different CAN buses 11, as in the case described. In general, this enables management of the majority of vehicles. However, the device may, of course, be configured for managing a larger number of CAN buses 11 according to the vehicle configuration. In variant embodiments, the protection module 30 manages, instead, only the first CAN bus 11, in particular the one connected to the engine control unit.

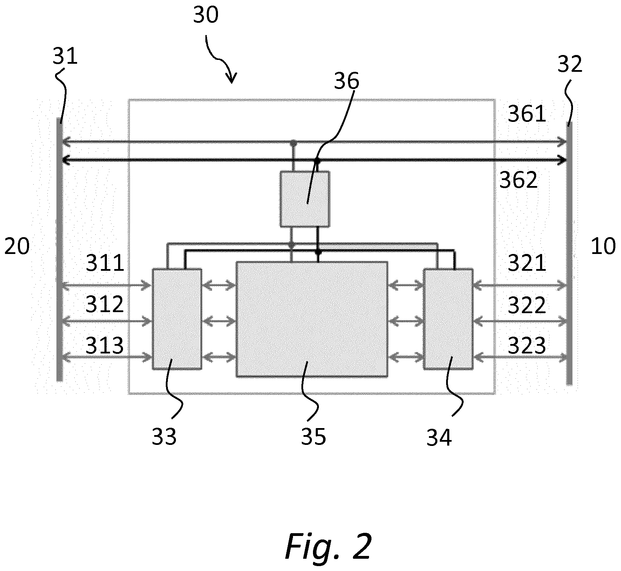

The above protection device 30, as illustrated in Figure 2, is a microprocessor device, in particular comprising a microcontroller, which includes three input/output ports on the diagnostic-connector side 31, one for each CAN bus 11 to be managed, which are designated by 311, 312, 212, and three input/output ports on the vehicle side 32, which are designated by 321, 322, 232, towards three CAN buses 11 in the vehicle 10.

The block 36 in the protection device 30 represents a supply module, which, starting from a battery voltage 361, available in the vehicle 50, generates the voltages for supply of the remaining modules of the protection device 30. The supply module 36 is also connected to a vehicle-frame ground line. The battery voltage 361 and the frame ground 362 are also connected to the respective pins in the connector 20 and, as has been mentioned, come from the vehicle side.

Designated by 33 and 34 in Figure 2 are CAN transceivers, i.e., CAN interfaces, for the connector side 31 and the vehicle side 32, respectively, which are necessary for managing passage from the physical layer to the logic layer of the CAN bus.

Designated by 35 is a microcontroller, which, preferably via embedded software, implements the method described herein and the procedure for blocking the messages CF at input to and output from the vehicle through the diagnostic connector 20.

The flow of the data in the messages CF traverses the protection device 30; namely, the data coming from the connector side 31, for example from a diagnostic instrument connected to the connector 20, pass through one of the input/output ports 311, 312, 313, connector side, and are forwarded (or blocked, according to the configuration implemented) on the vehicle side 32, to one of the input/output ports 321, 322, 323, vehicle side, and vice versa.

Without this implying any loss of generality, it is assumed that the first input/output port 311 for the first CAN bus 11 corresponds to the CAN bus of the diagnostic connector 20 specified by the SAE J1962 standard, for example the one on the pins 6 and 14. As has been mentioned, the protection device referred to by way of example is able to manage from one to three CAN lines or buses. To enable access to other CAN buses, if so required, it is possible to use the pins of the SAE J1962 connector that can be used at the discretion of the manufacturer.

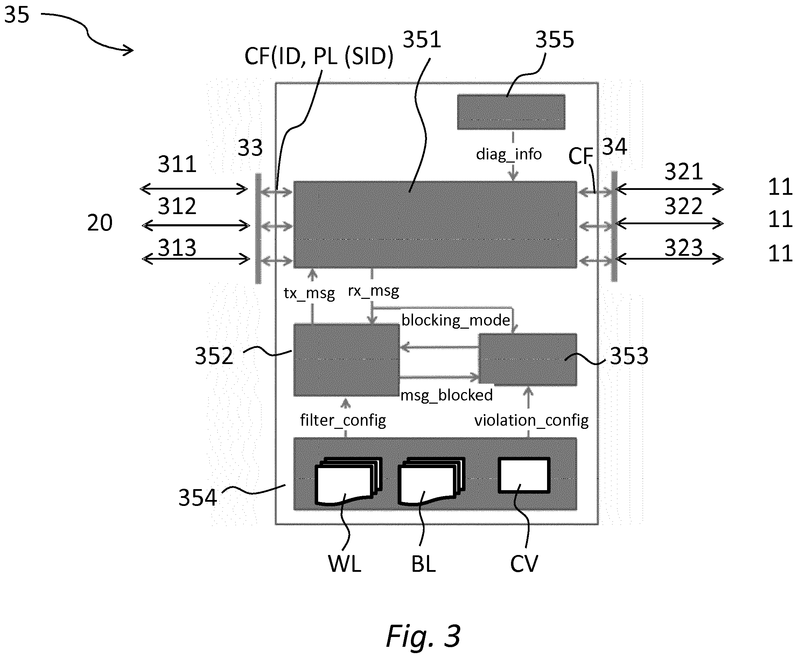

The microcontroller 35 comprises a plurality of functional modules, preferably implemented via software programming of the microcontroller 35 itself, which are illustrated in greater detail in the functional diagram of the microcontroller 35 represented in Figure 3.

The aforesaid plurality of functional modules comprises a block 351 for managing the logic layer of the CAN bus 11, configured to enable access in reading/writing to the individual messages CF, or frames, of the communication in progress on the bus 11. The logic-layer management block 351 receives and transmits the CAN messages CF through the CAN transceivers 34 and 35 and basically reads the aforesaid messages CF, which are travelling in the CAN format, and sends their contents as received messages *rx_msg* to a filtering block 352 and to a violation detector 353. The logic-layer management block 351 likewise receives messages to be transmitted *tx_msg* from the filtering block 352.

A filtering-configuration block 354 stores the filtering configuration to be adopted on the messages received *rx_msg.* This configuration is structured on the basis of the composition of a CAN message, which may approximately be deemed as being made up of an identifier ID and a data section, or payload, PL. The CAN message CF also contains other segments, such as start of frame, and control packets, which are not here important for the purposes of the description of the solution. The complete composition of a CAN message is in any case in itself known to the person skilled in the sector and is indicated, for example, in the ISO 15765-2:2011 and ISO 15765-4:2011 standards.

In the case of CAN messages CF of a diagnostic type, the identifier ID assumes given values, in line with what is specified, for example, by the ISO 15765-2:2011 and ISO 15765-4:2011 standards. Furthermore, the data section PL, in the case of a CAN message CF of a diagnostic type, contains both the type of diagnostic service, via a service-identifier field SID, and the parameters of the service itself. The format of the parameters of the diagnostic service is specified, for example, in the ISO 14229:2013 and ISO 15031-5:2011 standards.

As has already been mentioned, it is in general envisaged to allow only the messages CF to travel with given identifiers ID. Moreover, messages with given service identifiers SID are blocked.

Hence, in the block 354 the filtering configuration is implemented via a white list WL stored therein. By "white list" is meant a list of licit elements, i.e., a list the elements of which are enabled for performing a given operation, in the case in point, a list of message identifiers ID enabled for transmission, a list of authorizations for the identifiers ID, the messages CF corresponding to which can travel through the protection device 30. Moreover, the filtering configuration is implemented via a black list BL, stored in the block 354. By "black list" is meant a blocking list, i.e., a list the elements of which are blocked from performing a given operation, in the case in point a list of service identifiers that are blocked as regards transmission by the protection device 30, the messages CF corresponding to which hence cannot travel through the protection device 30; i.e., they are blocked.

Designated by 352 is a CAN filtering module, configured, given a certain configuration of white/black lists of the messages in the module 354, received through a filtering-configuration signal *filter_config* issued by the block 254, for deciding which received message *rx_msg* or which is to be forwarded to the other end as transmitted message *tx_msg.* The filtering-configuration signal *filter_config,* as described in detail also hereinafter, contains, instead, the information on the white lists WL and black lists BL, and respective criteria for the vehicle conditions CV pertaining to that given filtering mode, as explained in what follows.

The violation-detection module 353 is configured for detecting the presence of messages of invalid format in the messages received *rx_msg,* or else for storing the information that a message has been blocked by the module 352 because it does not meet the filtering rules or because it is suspect of forming part of DOS attacks. For this purpose, the violation-detection module 353 is configured for issuing an additional blocking signal *blocking_mode* to the filtering module 352, which consequently blocks the corresponding message or messages received rx_msg, irrespective of whether they meet the filtering criteria deriving from the module 354. The configuration module 354 supplies, through a violation-configuration signal *violation_config,* the type of attacks, besides the ones filtered by the filtering module 352, to be checked and blocked.

Finally, the diagnostic module 356 is configured for managing diagnostic information *diag_info* regarding the protection device 20 such as identifier, operating state, etc.

For a better understanding, there now follows a detailed description of the functions and the inputs and outputs of the functional modules of Figure 3.

In particular, the message received *rx_msg* represents the signal received by the protection device 30 on a given CAN bus 11. It is generated by a block 351 for managing the logic layer of the CAN bus 11 and is used by the filtering module to decide whether the message satisfies given filtering rules. If it does, the message received *rx_msg* is re-forwarded to the corresponding CAN bus 11, as message *tx_msg* to be forwarded. The message received *rx_msg* is also supplied to the violation-detection module 353 for detecting any possible violations of format or of reception rate.

The re-forwarded message *tx_msg,* as has been mentioned, basically corresponds to the message received *rx_msg* that is to be re-forwarded, if it is judged to be valid by the module 352 and by the module 353, on a given CAN bus 11.

It is generated by the filtering module 352, as has been mentioned on the basis of its own filtering operation and under the control of the violation-detection module 353 and of a corresponding blocking signal *blocking_mode* described in what follows, and sent to the logic module 351.

The filtering module 352 issues a message-blocked logic signal *msg_blocked,* which represents the outcome of the filtering rules applied on the message received *msg_rx.* The message-blocked logic signal *msg_blocked* is true if the message received *msg_rx* is to be blocked because it does not meet the blocking rules applied, and is false otherwise. The message-blocked logic signal *msg_blocked* is used by the module 353 to keep trace of how many violations have been detected. Once a certain threshold is overstepped, which is a parameter contained in a violation-configuration signal *violation_config,* sent by the module 354, there is brought about a total blocking of the future messages, via a signal *blocking_mode* irrespective of whether they are valid or not; this behaviour remains unaltered as long as the protection device 30 remains on.

The signal *blocking_mode* is generated by the violation-detection module 353 and represents the blocking mode to be implemented on the messages received. It can assume the value FORCED (in this case, all the future messages will be blocked, irrespective of their validity, as has been mentioned previously) or AUTO (in this case, what decides what is to be blocked is just the filtering module 352). The signal *blocking_mode* is used by the filtering module 11 to decide whether to block the message received *rx_msg* irrespective of its validity or whether to evaluate it by applying the blocking rules.

The filtering-configuration signal *filter_config* contains the configuration of the filtering modes (black lists BL, white lists WL, and vehicle conditions CV) to be used for validating the messages received *rx_msg.* It is generated by the filtering-configuration block 354 and used by the filtering module 352 to decide whether to block the message received or not.

The violation-configuration signal *violation_config* represents the configuration of the violation parameters (for example, threshold values of violation counters) for controlling the blocking mode (FORCED or AUTO) via the signal *blocking_mode.* Also this is generated by the filtering-configuration block 354 and is used by the violation-detection module 353.

The diagnostic-information signal *diag_info* represents diagnostic information of the protection device 30 (identifier, operating state, etc.) to be transmitted upon request on the CAN bus. It is generated by the filtering-configuration block 355.

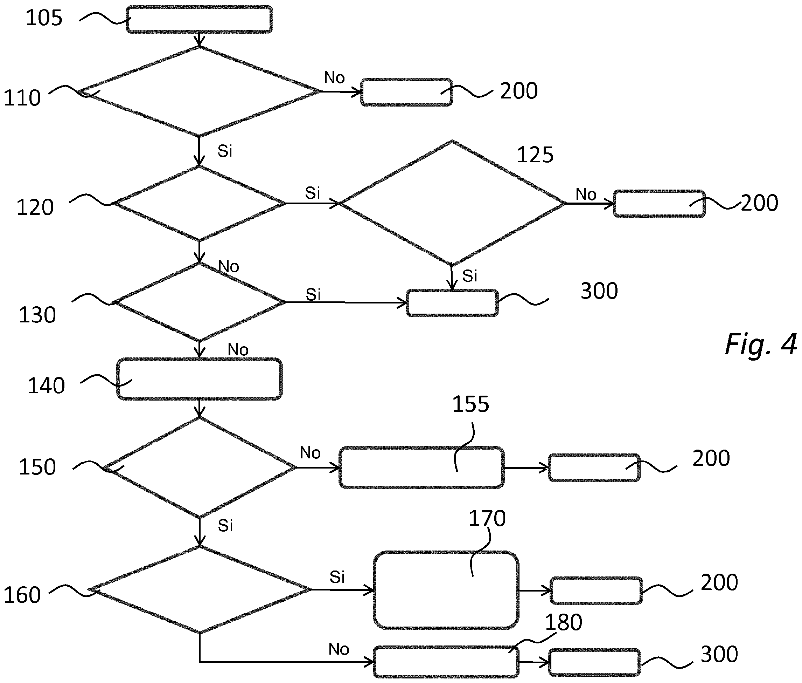

In general, the protection device 30 is configured for carrying out a procedure of selective blocking of CAN messages in accordance with the following rules that define respective filtering modes:
- for the frames that travel from the first port, diagnostic-connector side 311, to the first port, vehicle side 321, there is envisaged a first filtering mode, illustrated in greater detail with reference to the flowchart of Figure 4, where:
   o the messages CF identified as non-diagnostic, i.e., the messages the identifier ID of which does not respect given values that identify a diagnostic message, are always blocked;
   o a selected portion of the diagnostic messages CF, i.e., the messages the identifier ID of which respects given values that identify a diagnostic message, is selectively blocked on the basis of given vehicle conditions 50; for instance, the services of reprogramming of a control unit are blocked if the speed of the vehicle is higher than a certain given value; this behaviour is obtained by creating for the messages CF on the port 311:
      ▪ a white list WL, in which all the possible values of identifier ID of a diagnostic type are entered, whereas, in a field CV for the vehicle conditions, the value "any" is specified, i.e., no filtering is envisaged on the basis of the vehicle condition; and
      ▪ a black list BL, in which only some values of the service identifiers SID are entered, whereas, in a field CV for the vehicle conditions, a condition is specified whereby filtering is to be carried out; in particular, the value "speed higher than Vmin", where Vmin is a given minimum speed, is specified;
- for the messages that travel from the first port, vehicle side 321, to the first port, diagnostic-connector side 311, a second selection mode is envisaged whereby all the messages CF are allowed to pass (it is not deemed necessary to block any message from the inside of the vehicle to the outside); this behaviour is obtained by creating for this CAN input:
   ∘ a white list WL, in which all the possible values of identifier ID of a diagnostic type are entered, whereas, in a field CV for the vehicle conditions, the value "any" is specified; and
   ∘ an empty black list, which is associated to the service identifiers SID for the messages of a diagnostic type, whereas the value "any" is specified in the field CV;
- for the messages CF that are exchanged between the second port, diagnostic-connector side 312, or the third port, diagnostic-connector side 313, and the second port, vehicle side 322, or, respectively, the third port, vehicle side 323, a third filtering mode is envisaged in which all the messages CF are allowed to pass if a certain vehicle condition is satisfied, in particular the speed of the vehicle is lower than a certain value, whereas they are blocked otherwise; this behaviour is obtained by creating for these CAN inputs:
   ∘ a white list WL, in which all the possible values of identifiers ID of a diagnostic and non-diagnostic type are entered, whereas, as vehicle-condition field CV, the value "speed lower than Vmin" is specified; and
   ∘ an empty black list BL, which is associated to the service identifiers SID for the messages of a diagnostic type, whereas, as vehicle-condition field CV, the value "any" is specified;
   in general, this third mode aims at letting through all the messages from one end to the other of the protection device 30 if the vehicle 50 is stationary, and at blocking all of them if, instead, the vehicle 50 is moving (these conditions are established on the basis of whether the speed is lower or higher than the minimum speed Vmin that identifies a condition of vehicle stationary).

In addition to the blocking rules indicated above, and to the corresponding filtering modes, as has been mentioned with reference to the interaction of the blocks 352 and 353, the protection device 30 is configured for evaluating whether an excessive number of CAN frames CF are received in a given period of time to detect and block a Denial-of-Service attack, through, in particular, the module 353, as explained in what follows.

The protection device 30 is also configured for implementing a sleep mode, in combination with wake-up characteristics, of the CAN protocol. For instance, the CAN transceivers 33 and 34, in a way in itself known, are of the type configured for generating a signal that indicates whether there is activity on the CAN bus 11. This signal, if available, is for example connected to a pin of the supply module 36, which in particular comprises a voltage regulator that wakes the module 36 up, i.e., enables it for operation, if there is activity on the corresponding CAN bus 11. The microcontroller 25 is, instead, configured via software for operating in an opposite way; namely, it switches off the module 36 after a certain, configurable, number of seconds, starting from the instant when on the CAN transceivers 33 and 34 there is no longer signal activity on the bus, and then the device switches off.

Given that the aforesaid characteristics are conveyed by CAN frames on the input/output ports, they do not require further connections to the protection device 30, rendering the protection device 30 suitable for installation on any type of vehicle.

From the standpoint of installation, the protection device 30 is set between the network 10 or the respective buses 11 and a device that transmits or receives CAN frames that are to travel through the diagnostic socket, in particular a diagnostic device, for example the FLEX tester manufactured by Magneti Marelli.

The protection device 30 is compatible for OEM (Original Equipment Manufacturer) installation downstream of the diagnostic connector 20 in the direction of travel of the vehicle, for example directly behind the connector, obtaining as a whole a protected OBD connector. For after-market installation, the OBD connector has its own outputs (i.e., the pins) associated, as in the prior art, to the CAN bus or buses 11 of the vehicle. The protection device 30 is associated on the input side of the diagnostic connector 20; i.e., the vehicle side 32 illustrated in Figure 2 is connected in this case to the OBD connector 20, whereas, on the connector side 31, a diagnostic device may, for example, be connected. It follows that the protection device 30 and the connector 20 appear, to the diagnostic device, as a whole as a protected connector.

Figure 4 presents the flowchart of a procedure 100 for selective blocking of the diagnostic frames CF implemented in the protection device 30.

Designated by 105 is a step of reception of CAN frames or messages CF at the port 311 on the diagnostic-connector side.

In step 110, a check is made to see whether the identifier of the CAN message CF received is present in a white list WL, i.e., an authorization list, namely, a list of identifiers of CAN messages that are allowed to be transmitted and that satisfy given vehicle conditions. If these conditions are not met, a message-blocking action 200 is carried out; i.e., the message is not transmitted by the protection device 30 to the port, vehicle side 321, for being forwarded to the corresponding CAN bus 11.

If the above conditions are met, a step 120 is carried out to check whether the CAN message CF received is a consecutive frame. If it is, a step 125 is carried out to check whether the CAN message CF received is a consecutive frame belonging to a frame identifier previously transmitted. If it is not, a message-blocking action 200 is carried out. If, instead, it is, an action is carried out of transmission of the message 300 at output from the protection device 30, in particular on the port 321.

If the outcome of the verification step 120 is negative, in a step 130 a check is made to see whether the CAN message CF received is a flow-control message. If it is, an action is carried out of transmission of the message 300 at output from the protection device 30. If it is not, a step 140 is carried out for storage of the type of CAN message CF received, for example, it as single message or first message.

Then, in a step 150, a check is made to verify whether the CAN message CF received is a diagnostic message with a valid service identifier SID.

If the outcome of step 150 is negative, in a step 155 the information that the CAN message CF received is blocked is stored in the protection device 30 (in particular, by storing the frame identifier), and a message-blocking action 200 is carried out.

If the outcome of step 150 is positive, a check is made to verify whether the CAN message CF received is a diagnostic message with a service identifier SID in a black list, i.e., a list of service identifiers to be blocked, for given vehicle conditions.

If it is, in a step 170 the information that the CAN message CF received is blocked is stored in the protection device 30, and a message-blocking action 200 is carried out.

If it is not, in a step 180 the information that the CAN message CF received is transmitted is stored in the protection device 30 (in particular, by storing the frame identifier), and an action of transmission of the message 300 at output from the protection device 30 is carried out.

Provided in the above description of the steps of the method of Figure 4 is the identification of types of message, such as consecutive message or frame, in step 120, flow-control message or frame, in step 130, and single/first message or frame, in step 140. The definitions of consecutive frame, flow-control frame, and single/first frame are proper to the transport protocol of the CAN diagnostic protocol, illustrated, for example, in the ISO 15765-4:2011 standard, whereby, in the case where the data section PL of the CAN message CF is longer than 8 bytes, the communication is made by dividing the message into a number of messages. In order to be able to manage any type of length, within the single CAN message a field is present that makes it possible to understand whether the message itself is of one of the following types:
∘ "single frame": this is used for a data section of a length shorter than or equal to 8 bytes; this type of message contains the service-identifier information; or
∘ "first frame": for a data section of a length longer than 8 bytes, this is used for the first one of the n messages into which the data section is divided; this type of message contains the service-identifier information; or
∘ "consecutive frame": for a data section of a length longer than 8 bytes, this is used for the (n-1) messages, subsequent to the first message, of the n messages into which the data section is divided; this type of message does not contain the service-identifier information; or
∘ "flow-control frame": this is sent by the addressee of the data section PL in the case where the latter is longer than 8 bytes and following upon reception of the "first frame" and is used as synchronisation message to inform the sender on the rate of sending of the subsequent "consecutive frames".

Hence, since in the case of "consecutive frames" the service-identifier information is not present, it is necessary to store the information on whether the corresponding "single frame" had been blocked or not, as was done in step 155, to be able to block or not the subsequent "consecutive frames" in the messages CF.

Consequently, from what has been described above, the advantages of the solution proposed emerge clearly.

The device and method described enable active filtering of the messages, and is hence able to block messages to the vehicle, guaranteeing the maintenance and diagnostic functions executed via the OBD connector, without requiring external enabling commands for control of the device and of the procedure.

The device described, also by virtue of the aforesaid characteristics of autonomous operation is advantageously suitable for OEM or after-market installation.

The device described herein is configured for being not only autonomous, but also always active, with automatic wake-up for reducing electric-power consumption.

## Claims

1. A device for protection from cyber attacks through a vehicle diagnostic connector (20) that accesses at least one CAN (Controller Area Network) communication network (10) of a vehicle comprising a CAN bus (11) and a plurality of nodes (12), which are associated to said CAN bus (11) in a signal-exchange relationship and comprise control units (12) for controlling vehicle functions, said vehicle diagnostic connector (20) accessing said at least one CAN communication network (10) for exchanging messages (CF) that comprise a message identifier (ID) and a data portion (PL), said device comprising:
means (33) for receiving and transmitting messages (CF) from and to said diagnostic connector (20);
means (34) for receiving and transmitting messages (CF) from and to said at least one CAN communication network (10); and
a microprocessor module (35) configured for detecting said message identifier (ID) and a diagnostic-service identifier (SID) comprised in the data portion of a message received (CF) at said protection device (30) and carrying out blocking of the messages (CF) according to the value of said message identifier (ID) and of said diagnostic-service identifier (SID), and according to information on the vehicle conditions (CV),
said operation of carrying out blocking comprising
verifying if the received message (CF) comprises a valid diagnostic service identifier (SID),
verifying if the received message (CF) comprises a diagnostic service identifier (SID) which is present in a list of service identifiers to be blocked, for given vehicle conditions (CV).

2. The device according to Claim 1, **characterized in that** it is configured for being set in connection between said CAN communication network (10), which is accessed by the diagnostic connector (20), and a device that transmits or receives CAN frames that are to travel through said diagnostic connector (20).

3. The device according to Claim 1 or Claim 2, **characterized in that** said microprocessor module (35) comprises a filtering-configuration module (354) configured for storing one or more enablement lists (WL) of message identifiers (ID) that are not to be blocked, one or more blocking lists (BL) of diagnostic-service identifiers (SID) that are to be blocked, and criteria to be met by the information on the vehicle conditions (CV).

4. The device according to any one of the preceding claims, **characterized in that** it comprises a filtering module (352) configured for verifying the presence, in enablement lists (WL) and blocking lists (BL), of the message identifier (ID) and of the diagnostic-service identifier (SID) comprised in the data portion of a message received (CF), in particular in the presence of respective criteria to be met by the information on the vehicle conditions (CV) for said enablement lists (WL) and blocking lists (BL).

5. The device according to any one of the preceding claims, **characterized in that**, in a first filtering mode, the device (30) is configured for blocking the messages (CF) that do not comprise a message identifier (ID) that identifies a diagnostic service (SID) and for blocking a part of the messages that comprise a message identifier (ID) that identifies a diagnostic service (SID) if the information on the vehicle conditions (CV) meets a given criterion.

6. The device according to claim 5, **characterized in that**, in said first filtering mode, a enablement list (WL) comprises all the values of message identifier (ID) associated to a CAN message of a diagnostic type, and said criterion for the information on the vehicle conditions (CV) is set so as not to carry out filtering, whereas a blocking list (BL) comprises given values of diagnostic-service identifier (SID), and the corresponding criterion for the information on the vehicle conditions (CV) is set to a condition where filtering is carried out.

7. The device according to any one of the preceding claims, **characterized in that**, in a second filtering mode, the device (30) is configured to let all the messages (CF) through.

8. The device according to any one of the preceding claims, **characterized in that**, in a third filtering mode, the device (30) is configured for letting the messages (CF) through if a corresponding criterion for the information on the vehicle conditions (CV) is satisfied, in particular, if the speed of the vehicle is lower than a minimum speed value (Vmin).

9. The device according to any one of the preceding claims, **characterized in that** it comprises a violation-detection module (353) configured for detecting the presence of messages with invalid format in the messages received or else for detecting messages received that have to be blocked because they do not satisfy filtering rules, or because they are suspect of forming part of Denial-Of-Service attacks.

10. The device according to any one of the preceding Claims 5 to 7, **characterized in that** said protection device (30) is connected to a plurality of CAN buses (11) and **in that** said first mode is applied at least to the messages transmitted from a connector side (31) of the protection device (30) to the vehicle side (32) of the protection device (30) on one of said CAN bus lines (11).

11. A method for protection from cyber attacks through a diagnostic connector (20) of a vehicle (50) that accesses at least one CAN communication network (10) of the vehicle, which comprises a CAN bus (11), said method using the protection device according to any one of Claims 1 to 10 and comprising the steps of:
receiving and transmitting messages (CF) from and to said diagnostic connector (20);
receiving and transmitting messages (CF) from and to said at least one CAN communication network (10); and
detecting a message identifier (ID) and a diagnostic-service identifier (SID) comprised in the data portion of a message received (CF) at said protection device (30), and carrying out blocking of the messages (CF) according to the value of the message identifier (ID) and of the diagnostic-service identifier (SID), and according to information on the vehicle conditions (CV),
said operation of carrying out blocking comprising
verifying if the received message (CF) comprises a valid diagnostic service identifier (SID),
verifying if the received message (CF) comprises a diagnostic service identifier (SID) which is present in a list of service identifiers to be blocked, for given vehicle conditions (CV).

## Patentansprüche

1. Vorrichtung zum Schützen vor Cyberattacken über einen Fahrzeugdiagnosestecker (20), der auf mindestens ein CAN(Controller Area Network)-Kommunikationsnetzwerk (10) eines Fahrzeugs zugreift, umfassend einen CAN-Bus (11) und mehrere Knoten (12), die dem besagten CAN-Bus (11) in einer Signalaustauschbeziehung zugeordnet sind und Steuereinheiten (12) zum Steuern von Fahrzeugfunktionen umfassen, wobei der besagte Fahrzeugdiagnosestecker (20) zum Austauschen von Nachrichten (CF), die eine Nachrichtenkennung (ID) und einen Datenabschnitt (PL) umfassen, auf das besagte mindestens eine CAN-Kommunikationsnetz (10) zugreift, wobei die besagte Vorrichtung Folgendes umfasst:
Mittel (33) zum Empfangen und Senden von Nachrichten (CF) von und zu dem besagten Diagnosestecker (20);
Mittel (34) zum Empfangen und Senden von Nachrichten (CF) von und zu dem besagten mindestens einen CAN-Kommunikationsnetz (10); und
ein Mikroprozessormodul (35), konfiguriert zum Detektieren der besagten Nachrichtenkennung (ID) und einer Diagnosedienstkennung (SID), die in dem Datenabschnitt einer an der besagten Schutzvorrichtung (30) empfangenen Nachricht (CF) enthalten sind, und zum Ausführen des Blockierens der Nachrichten (CF) in Abhängigkeit von dem Wert der besagten Nachrichtenkennung (ID) und der besagten Diagnosedienstkennung (SID) und in Abhängigkeit von Informationen betreffend die Fahrzeugzustände (CV),
wobei der besagte Vorgang des Ausführens der Blockierung Folgendes umfasst:
das Überprüfen, ob die empfangene Nachricht (CF) eine gültige Diagnosedienstkennung (SID) umfasst,
das Überprüfen, ob die empfangene Nachricht (CF) eine Diagnosedienstkennung (SID) umfasst, die in einer Liste von für bestimmte Fahrzeugzustände (CV) zu sperrenden Dienstkennungen vorhanden ist.

2. Vorrichtung nach Anspruch 1, **dadurch gekennzeichnet, dass** sie konfiguriert ist, in Verbindung zwischen dem CAN-Kommunikationsnetzwerk (10), auf das der Diagnosestecker (20) zugreift, und einer Vorrichtung, die CAN-Rahmen sendet oder empfängt, die durch den Diagnosestecker (20) verlaufen sollen, gesetzt zu werden.

3. Vorrichtung nach Anspruch 1 oder 2, **dadurch gekennzeichnet, dass** das besagte Mikroprozessormodul (35) ein Filterungskonfigurationsmodul (354) umfasst, das konfiguriert ist, eine oder mehrere Aktivierungslisten (WL) von Nachrichtenkennungen (ID), die nicht zu sperren sind, eine oder mehrere Sperrlisten (BL) von Diagnosedienstkennungen (SID), die zu sperren sind, und Kriterien, die von den Informationen betreffend die Fahrzeugzustände (CV) zu erfüllen sind, zu speichern.

4. Vorrichtung nach einem der vorhergehenden Ansprüche, **dadurch gekennzeichnet, dass** sie ein Filtermodul umfasst (352), konfiguriert zum Verifizieren des Vorliegens der Nachrichtenkennung (ID) und der Diagnosedienstkennung (SID), die in dem Datenabschnitt einer empfangenen Nachricht (CF) enthalten sind, in Aktivierungslisten (WL) und Sperrlisten (BL), insbesondere bei Vorliegen entsprechender Kriterien, die von den Informationen betreffend die Fahrzeugzustände (CV) für die besagten Aktivierungslisten (WL) und Sperrlisten (BL) zu erfüllen sind.

5. Vorrichtung nach einem der vorhergehenden Ansprüche, **dadurch gekennzeichnet, dass** in einem ersten Filtermodus die Vorrichtung (30) konfiguriert ist zum Blockieren der Nachrichten (CF), die keine Nachrichtenkennung (ID) umfassen, welche einen Diagnosedienst (SID) identifiziert, sowie zum Sperren eines Teils der Nachrichten, die eine Nachrichtenkennung (ID) umfassen, die einen Diagnosedienst (SID) identifiziert, wenn die Informationen betreffend die Fahrzeugzustände (CV) ein bestimmtes Kriterium erfüllen.

6. Vorrichtung nach Anspruch 5, **dadurch gekennzeichnet, dass** in dem besagten ersten Filtermodus eine Aktivierungsliste (WL) alle Werte einer Nachrichtenkennung (ID) umfasst, die einer CAN-Nachricht eines Diagnosetyps zugeordnet sind, und das besagte Kriterium für die Informationen betreffend die Fahrzeugzustände (CV) so eingestellt wird, dass keine Filterung durchgeführt wird, während eine Sperrliste (BL) vorgegebene Werte der Diagnosedienstkennung (SID) umfasst, und das entsprechende Kriterium für die Informationen betreffend die Fahrzeugzustände (CV) auf eine Bedingung eingestellt ist, bei der gefiltert wird.

7. Vorrichtung nach einem der vorhergehenden Ansprüche, **dadurch gekennzeichnet, dass** in einem zweiten Filtermodus die Vorrichtung (30) so konfiguriert ist, dass sie alle Nachrichten (CF) durchlässt.

8. Vorrichtung nach einem der vorhergehenden Ansprüche, **dadurch gekennzeichnet, dass** in einem dritten Filtermodus, die Vorrichtung (30) konfiguriert ist, die Nachrichten (CF) durchzulassen, wenn ein entsprechendes Kriterium für die Informationen betreffend die Fahrzeugzustände (CV) erfüllt ist, insbesondere, wenn die Geschwindigkeit des Fahrzeugs unter einem Mindestgeschwindigkeitswert (Vmin) liegt.

9. Vorrichtung nach einem der vorhergehenden Ansprüche, **dadurch gekennzeichnet, dass** es ein Verletzungs-Detektionsmodul umfasst (353), konfiguriert für das Detektieren des Vorliegens von Nachrichten mit ungültigem Format in den empfangenen Nachrichten oder auch zum Detektieren von empfangenen Nachrichten, die blockiert worden sind, weil sie die Filterregeln nicht erfüllen oder weil sie im Verdacht stehen, Teil von Denial-Of-Service-Angriffen zu sein.

10. Vorrichtung nach einem der vorhergehenden Ansprüche 5 bis 7, **dadurch gekennzeichnet, dass** die besagte Schutzvorrichtung (30) mit mehreren CAN-Bussen verbunden ist (11), und dass der besagte erste Modus zumindest auf die Nachrichten angewandt wird, die über eine der besagten CAN-Bus-Leitungen (11) von einer Steckerseite (31) der Schutzvorrichtung (30) zu der Fahrzeugseite (32) der Schutzvorrichtung (30) übertragen worden sind.

11. Verfahren zum Schützen vor Cyberangriffen über einen Diagnosestecker (20) eines Fahrzeugs (50), der auf mindestens ein CAN-Kommunikationsnetzwerk (10) des Fahrzeugs zugreift, umfassend einen CAN-Bus (11), wobei das besagte Verfahren die Schutzvorrichtung nach einem der Ansprüche 1 bis 10 einsetzt, die folgenden Schritte umfassend:
Empfangen und Senden von Nachrichten (CF) von und zu dem besagten Diagnosestecker (20);
Empfangen und Senden von Nachrichten (CF) von und zu dem besagten mindestens einen CAN-Kommunikationsnetz (10); und
Detektieren einer Nachrichtenkennung (ID) und einer Diagnosedienstkennung (SID), die in dem Datenabschnitt einer an der besagten Schutzvorrichtung (30) empfangenen Nachricht (CF) enthalten sind, und Ausführen des Blockierens der Nachrichten (CF) in Abhängigkeit von dem Wert der Nachrichtenkennung (ID) und der Diagnosedienstkennung (SID) und in Abhängigkeit von Informationen betreffend die Fahrzeugzustände (CV),
wobei der Vorgang des Ausführens der Blockierung Folgendes umfasst:
das Überprüfen, ob die empfangene Nachricht (CF) eine gültige Diagnosedienstkennung (SID) umfasst,
das Überprüfen, ob die empfangene Nachricht (CF) eine Diagnosedienstkennung (SID) umfasst, die in einer Liste von für bestimmte Fahrzeugzustände (CV) zu sperrenden Dienstkennungen vorhanden ist.

## Revendications

1. Dispositif de protection contre des cyber attaques à travers un connecteur de diagnostic de véhicule (20) qui accède à au moins un réseau de communication CAN (Controller Area Network) (10) d'un véhicule comprenant un bus CAN (11) et une pluralité de nœuds (12), qui sont associés audit bus CAN (11) dans une relation d'échange de signaux et comprennent des unités de commande (12) pour commander des fonctions de véhicule, ledit connecteur de diagnostic de véhicule (20) accédant audit au moins un réseau de communication CAN (10) pour échanger des messages (CF) qui comprennent un identificateur de message (ID) et une portion de données (PL), ledit dispositif comprenant :
des moyens (33) pour recevoir et transmettre des messages (CF) dudit et audit connecteur de diagnostic (20) ;
des moyens (34) pour recevoir et transmettre des messages (CF) dudit et audit au moins un réseau de communication CAN (10) ; et
un module de microprocesseur (35) configuré pour détecter ledit identificateur de message (ID) et un identificateur de service de diagnostic (SID) compris dans la portion de données d'un message reçu (CF) au niveau dudit dispositif de protection (30) et exécuter un blocage des messages (CF) en fonction de la valeur dudit identificateur de message (ID) et de la valeur dudit identificateur de service de diagnostic (SID), et en fonction d'informations sur les conditions de véhicule (CV),
ladite opération d'exécution d'un blocage comprenant
de vérifier si le message reçu (CF) comprend un identificateur de service de diagnostic (SID) valide,
de vérifier si le message reçu (CF) comprend un identificateur de service de diagnostic (SID) qui est présent dans une liste d'identificateurs de service à bloquer, pour des conditions de véhicule (CV) données.

2. Dispositif selon la revendication 1, **caractérisé en ce qu'**il est configuré pour être mis en connexion entre ledit réseau de communication CAN (10), auquel accède le connecteur de diagnostic (20), et un dispositif qui transmet ou reçoit des trames CAN qui doivent circuler à travers ledit connecteur de diagnostic (20).

3. Dispositif selon la revendication 1 ou la revendication 2, **caractérisé en ce que** ledit module de microprocesseur (35) comprend un module de configuration de filtrage (354) configuré pour stocker une ou plusieurs listes d'habilitation (WL) d'identificateurs de message (ID) qui ne doivent pas être bloqués, une ou plusieurs listes de blocage (BL) d'identificateurs de service de diagnostic (SID) qui doivent être bloqués, et des critères auxquels doivent satisfaire les informations sur les conditions de véhicule (CV).

4. Dispositif selon l'une quelconque des revendications précédentes, **caractérisé en ce qu'**il comprend un module de filtrage (352) configuré pour vérifier la présence, dans des listes d'habilitation (WL) et des listes de blocage (BL), de l'identificateur de message (ID) et de l'identificateur de service de diagnostic (SID) compris dans la portion de données d'un message reçu (CF), en particulier en présence de critères respectifs auxquels doivent satisfaire les informations sur les conditions de véhicule (CV) pour lesdites listes d'habilitation (WL) et des listes de blocage (BL).

5. Dispositif selon l'une quelconque des revendications précédentes, **caractérisé en ce que**, dans un premier mode de filtrage, le dispositif (30) est configuré pour bloquer les messages (CF) qui ne comprennent pas un identificateur de message (ID) qui identifie un service de diagnostic (SID) et pour bloquer une partie des messages qui comprennent un identificateur de message (ID) qui identifie un service de diagnostic (SID) si les informations sur les conditions de véhicule (CV) satisfont à un critère donné.

6. Dispositif selon la revendication 5, **caractérisé en ce que**, dans ledit premier mode de filtrage, une liste d'habilitation (WL) comprend toutes les valeurs d'identificateur de message (ID) associées à un message CAN d'un type de diagnostic, et ledit critère pour les informations sur les conditions de véhicule (CV) est fixé de manière à ne pas exécuter un filtrage, alors qu'une liste de blocage (BL) comprend des valeurs données d'identificateur de service de diagnostic (SID), et le critère correspondant pour les informations sur les conditions de véhicule (CV) est fixé à une condition dans laquelle un filtrage est exécuté.

7. Dispositif selon l'une quelconque des revendications précédentes, **caractérisé en ce que**, dans un deuxième mode de filtrage, le dispositif (30) est configuré pour laisser passer tous les messages (CF).

8. Dispositif selon l'une quelconque des revendications précédentes, **caractérisé en ce que**, dans un troisième mode de filtrage, le dispositif (30) est configuré pour laisser passer les messages (CF) si un critère correspondant pour les informations sur les conditions de véhicule (CV) est satisfait, en particulier si la vitesse du véhicule est inférieure à une valeur de vitesse minimale (Vmin).

9. Dispositif selon l'une quelconque des revendications précédentes, **caractérisé en ce qu'**il comprend un module de détection de violation (353) configuré pour détecter la présence de messages avec un format invalide dans les messages reçus ou bien pour détecter des messages reçus qui doivent être bloqués parce qu'ils ne satisfont pas à des règles de filtrage, ou parce qu'ils étaient suspectés de faire partie d'attaques de déni de service.

10. Dispositif selon l'une quelconque des revendications précédentes 5 à 7, **caractérisé en ce que** ledit dispositif de protection (30) est connecté à une pluralité de bus CAN (11) et **en ce que** ledit premier mode est appliqué au moins aux messages transmis d'un côté connecteur (31) du dispositif de protection (30) au côté véhicule (32) du dispositif de protection (30) sur une desdites lignes de bus CAN (11).

11. Procédé de protection contre des cyber attaques à travers un connecteur de diagnostic (20) d'un véhicule (50) qui accède à au moins un réseau de communication CAN (10) du véhicule, qui comprend un bus CAN (11), ledit procédé utilisant le dispositif de protection selon l'une quelconque des revendications 1 à 10 et comprenant les étapes :
de réception et la transmission de messages (CF) dudit et audit connecteur de diagnostic (20) ;
de réception et la transmission de messages (CF) dudit et audit au moins un réseau de communication CAN (10) ; et
de détection d'un identificateur de message (ID) et d'un identificateur de service de diagnostic (SID) compris dans la portion de données d'un message reçu (CF) au niveau dudit dispositif de protection (30) et d'exécution d'un blocage des messages (CF) en fonction de la valeur de l'identificateur de message (ID) et de l'identificateur de service de diagnostic (SID), et en fonction d'informations sur les conditions de véhicule (CV),
ladite opération d'exécution d'un blocage comprenant
de vérifier si le message reçu (CF) comprend un identificateur de service de diagnostic (SID) valide,
de vérifier si le message reçu (CF) comprend un identificateur de service de diagnostic (SID) qui est présent dans une liste d'identificateurs de service à bloquer, pour des conditions de véhicule (CV) données.
